# FASCICULE DE BREVET EUROPEEN

(11) **EP 2 735 993 B1**
(45) Date de publication et mention de la délivrance du brevet: **29.06.2016**
(21) Numéro de dépôt: 13194054.6
(22) Date de dépôt: 22.11.2013
(51) Int. Cl.: G06F 21/53, G06F 21/55, G06F 9/455, G06F 9/54, H04W 12/08

(54) **PROCÉDÉ D'AIGUILLAGE D'UN MESSAGE**
Übertragungsverfahren einer Nachricht
Method for routing a message

(30) Priorité: 27.11.2012 FR 1261303
(43) Date de publication de la demande: 28.05.2014
(73) Titulaire: OBERTHUR TECHNOLOGIES, 92700 Colombes (FR)
(72) Inventeur: Bousquet, Nicolas, 92700 COLOMBES (FR)
(74) Mandataire: Lefevre-Groboillot, David André

(56) Documents cités:
- US-A1- 2008 051 122
- US-A1- 2010 333 088
- MARCEL SELHORST ET AL: "Towards a Trusted Mobile Desktop", 21 juin 2010 (2010-06-21), TRUST AND TRUSTWORTHY COMPUTING, SPRINGER BERLIN HEIDELBERG, BERLIN, HEIDELBERG, PAGE(S) 78 - 94, XP019145254, ISBN: 978-3-642-13868-3 * Chapitres 1, 3 and 4. *

## Description

### Arrière-plan de l'invention

La présente invention se situe dans le domaine de l'envoi et la réception de messages, par un dispositif électronique, par exemple un terminal ou encore une carte à puce, comportant plusieurs environnements d'exécution, dont au moins un est un environnement d'exécution de confiance et un autre un environnement d'exécution polyvalent (« Rich OS » en anglais). On rappelle que les environnements d'exécution, de confiance ou polyvalents, comprennent ou sont inclus dans des ensembles électroniques de type chipset ou System on Chip.

L'environnement d'exécution de confiance est mis en oeuvre à l'aide d'un processeur sécurisé, qui peut être un processeur dédié à cette tâche, ou avoir d'autres fonctions, et d'une mémoire non-volatile réinscriptible sécurisée, et est basé sur un système d'exploitation de confiance.

De manière similaire, l'environnement d'exécution polyvalent est basé sur un système d'exploitation polyvalent, permettant d'exécuter des applications d'origines diverses telle que l'Internet.

Aujourd'hui, lorsqu'un message est reçu par l'émetteur-récepteur d'un dispositif électronique, il est soit transmis à des éléments contrôlés par le système d'exploitation polyvalent s'exécutant sur ce dispositif comme par exemple un écran ou une mémoire, soit, lorsque le dispositif détecte que le message est reçu par une communication sécurisée, transmis à un élément sécurisé embarqué ou inséré dans le dispositif précité, tel que décrit dans le document US2008051122.

Cependant, dans le cas d'un dispositif électronique du type précité, c'est-à-dire comportant un environnement d'exécution de confiance, lorsque qu'un message est destiné au système d'exploitation de confiance ou à une de ses applications, il est possible qu'une application malveillante du système d'exploitation polyvalent fasse de la rétention ou détruise le message sans que celui-ci ne soit transmis au système d'exploitation de confiance. On parle alors de déni de service.

Il existe donc un besoin d'améliorer les procédés d'aiguillage de messages destinés à un système d'exploitation de confiance ou à une de ses applications.

Le document XP019145254, "Towards a Trusted Mobile Desktop", décrit un environnement mobile sécurisé.

### Objet et résumé de l'invention

La présente invention vise principalement à résoudre les inconvénients précités.

A cet effet, l'invention concerne un procédé d'aiguillage d'au moins un message, ce procédé étant mis en oeuvre sous la dépendance d'un système d'exploitation de confiance d'un dispositif électronique comportant un ensemble électronique sur lequel s'exécutent le système d'exploitation de confiance et un système d'exploitation polyvalent. Ce procédé comprend une étape de consultation d'une mémoire de confiance du dispositif électronique, dite première mémoire et lorsque cette première mémoire comporte un message, une étape de détermination du système d'exploitation visé par le message parmi au moins le système d'exploitation polyvalent et le système d'exploitation de confiance et lorsque ce message vise le système d'exploitation polyvalent, une étape de transfert de ce message de la première mémoire dans une mémoire accessible au système d'exploitation polyvalent, dite deuxième mémoire.

L'invention concerne également un ensemble électronique pour dispositif électronique, un système d'exploitation de confiance et un système d'exploitation polyvalent s'exécutant sur celui-ci, et l'ensemble électronique comprenant un module de consultation d'une mémoire de confiance du dispositif électronique, dite première mémoire et susceptible de contenir au moins un message et un module de détermination du système d'exploitation visé par ce message, un module de transfert de ce message de la première mémoire dans une mémoire accessible au système d'exploitation polyvalent, dite deuxième mémoire, lorsque le message vise le système d'exploitation polyvalent, ces trois modules étant exécutés sous la dépendance du système d'exploitation de confiance.

Ainsi un des avantages majeurs de l'invention est d'éviter le déni de service, puisque le système d'exploitation de confiance à accès aux messages en premier, contrairement à l'art antérieur où les messages sont transmis à des éléments contrôlés par le système d'exploitation polyvalent ou une de ses applications, de sorte que le système d'exploitation visé est déterminé de manière sécurisée par le système d'exploitation de confiance, sans qu'une application malveillante ne puisse prendre possession du message lorsqu'il est destiné au système d'exploitation de confiance ou à une de ses applications.

Dans un mode particulier de réalisation de l'invention, l'étape de consultation est effectuée en réaction à la réception d'une notification de réception d'un message via un canal dédié entre un notifieur du dispositif électronique et le système d'exploitation de confiance. Dans ce mode, le module de consultation est mis en oeuvre en réaction à la réception d'une notification de réception d'un message via un canal dédié entre un notifieur du dispositif électronique et le système d'exploitation de confiance.

L'utilisation d'un canal dédié permet d'éviter que le système d'exploitation polyvalent n'intercepte la notification. Ce canal peut être par exemple logique, ou physique.

En variante, l'étape de consultation est effectuée automatiquement à intervalles réguliers. Dans ce mode, le module de consultation est mis en oeuvre automatiquement à intervalles réguliers.

Dans un mode particulier de réalisation de l'invention, lorsque le message est destiné au système d'exploitation polyvalent, le procédé comporte une étape d'envoi d'une notification informant un notifieur du dispositif électronique que le message est destiné au système d'exploitation polyvalent. Dans ce mode, l'ensemble électronique comporte un module d'envoi d'une notification informant un notifieur du dispositif électronique que le message est destiné au système d'exploitation polyvalent.

Suite à cela, le notifieur peut ainsi informer le système d'exploitation polyvalent de la réception d'un message qui lui est destiné.

Dans un mode particulier de réalisation de l'invention, le message comprend une trame et l'étape de détermination comprend une étape de lecture d'un champ destinataire de cette trame ou du message pour identifier le système d'exploitation visé. Dans ce mode, le module de détermination comprend des moyens de lecture d'un champ destinataire de cette trame ou du message pour identifier le système d'exploitation visé.

L'étape de détermination peut alors comprendre en outre une étape d'obtention de l'adresse de moyens de communication de l'environnement d'exécution du système d'exploitation visé, à partir d'une adresse de destination comprise dans le champ destinataire de la trame ou du message, l'adresse de destination étant lue lors de l'étape de lecture. Dans ce mode, le module de détermination peut comprendre des moyens d'obtention de l'adresse de moyens de communication de l'environnement d'exécution du système d'exploitation visé, à partir d'une adresse de destination comprise dans le champ destinataire de la trame ou du message, l'adresse de destination étant lue par les moyens de lecture.

Dans un mode, l'étape d'obtention se fait par lecture de l'adresse des moyens de communication dans une table d'association mémorisée dans une mémoire accessible au système d'exploitation de confiance. Dans ce mode, les moyens d'obtention lisent l'adresse des moyens de communication dans une table d'association mémorisée dans une mémoire accessible au système d'exploitation de confiance.

L'invention couvre également l'aiguillage des messages du type de ceux reçus par les protocoles de communication utilisés dans la téléphonie mobile ou tout autre protocole de communication sans fil.

En variante, l'étape de détermination comprend une étape d'interprétation d'une commande contenue dans le message. Dans ce mode, le module de détermination comprend des moyens d'interprétation d'une commande contenue dans le message.

Ainsi, selon par exemple la nature de la commande, les moyens de détermination peuvent en déduire le système d'exploitation visé par le message.

L'invention concerne également un terminal comprenant un ensemble électronique tel que précité. Ce terminal peut être un terminal de téléphonie mobile.

En variante, ce terminal peut être un ordinateur portable ou une tablette tactile. Ce terminal peut aussi être un système intelligent autonome ou embarqué, largement utilisé dans le cadre d'architectures de type machine-to-machine, comme par exemple l'ordinateur de bord d'un véhicule.

Dans un mode particulier de réalisation de l'invention, ce terminal comporte un notifieur, un émetteur-récepteur, et un canal de communication dédié entre ce notifieur et l'émetteur-récepteur, par lequel l'émetteur-récepteur envoie le message au notifieur afin que le notifieur le mémorise dans la première mémoire.

Dans un mode particulier de réalisation de l'invention, l'ensemble électronique comprend le notifieur.

L'ensemble électronique peut être un chipset du terminal.

Dans un mode particulier de réalisation de l'invention, les étapes du procédé précité sont déterminées par les instructions d'un programme d'ordinateur.

En conséquence, l'invention vise aussi un programme d'ordinateur comportant des instructions pour la mise en oeuvre des étapes du procédé tel que décrit ci-dessus, lorsque le programme est exécuté par un processeur. Ce programme peut utiliser n'importe quel langage de programmation, par exemple sous la forme de code source ou de code objet. Le programme peut être compilé et/ou interprété ou dans n'importe quelle autre forme interprétable par un processeur.

Dans un mode particulier de réalisation de l'invention, ce programme d'ordinateur est le système d'exploitation de confiance.

Dans un autre mode de réalisation de l'invention, ce programme d'ordinateur est une extension (« patch » en anglais) du système d'exploitation de confiance. Cette extension a pour intérêt d'enrichir les API existantes, et constitue une alternative à une application native du système d'exploitation de confiance lorsqu'une telle application n'est pas à même de proposer certains services lorsqu'elle est déployée, ou à une application native qui ne pourrait pas être déployée. Une telle extension propose donc des fonctionnalités supplémentaires initialement non proposées par le système d'exploitation de confiance. L'invention vise aussi un support d'information lisible par un ordinateur et comportant les instructions d'un programme d'ordinateur tel que mentionné ci-dessus.

Ce support d'information peut être n'importe quelle entité ou dispositif, embarqué ou amovible, capable de stocker le programme. Par exemple, le support peut être un moyen de stockage tel qu'une mémoire ROM, un CDROM ou une ROM de circuit micro-électronique ou encore un moyen d'enregistrement magnétique par exemple un disque dur, ou une mémoire de type flash ou RAM.

D'autre part, le support d'information peut être un support transmissible tel qu'un signal électrique ou optique qui peut être acheminé via un câble électrique ou optique, par radio ou par d'autres moyens. Le programme selon l'invention peut être en particulier téléchargé dans un espace de stockage en ligne ou sur une plateforme Internet.

Alternativement, le support d'information peut être un circuit intégré dans lequel le programme d'ordinateur est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- les figures 1A, 1B et 1C représentent schématiquement un dispositif électronique selon trois modes de réalisation de l'invention ;
- la figure 2 représente sous forme d'organigramme, les principales étapes d'un procédé d'aiguillage selon un premier mode de réalisation de l'invention, pouvant être mis en oeuvre dans le terminal de la figure 1C ;
- la figure 3 représente sous forme d'organigramme, les principales étapes d'un procédé d'aiguillage selon un deuxième mode de réalisation de l'invention pouvant être mis en oeuvre dans le terminal de la figure 1A ou bien dans celui de la figure 1B ;
- les figures 4, 5A et 5B représentent schématiquement des exemples de message selon l'invention, à savoir des trames SMS, selon le protocole TCP/IP et Bluetooth.

### Description détaillée de l'invention

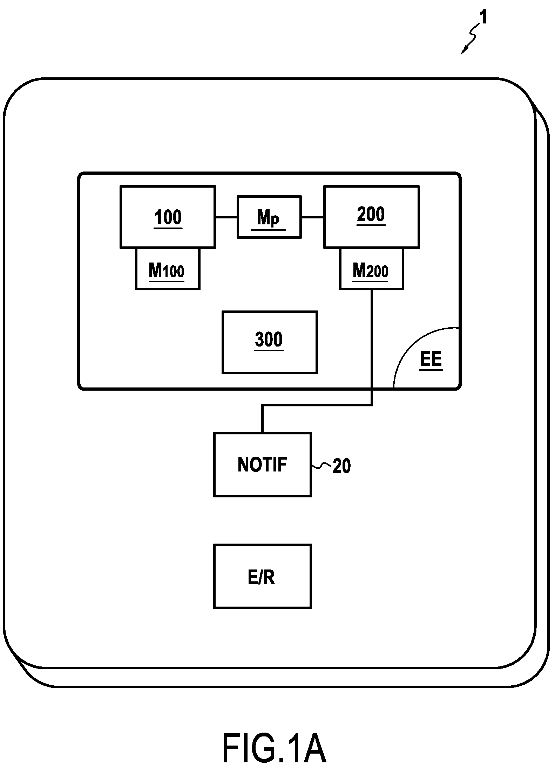

La **figure 1A** représente un dispositif électronique 1 selon un mode de réalisation de l'invention. Dans cet exemple, le dispositif électronique est un terminal, par exemple une tablette tactile, un ordinateur portable, ou un téléphone mobile.

En variante il aurait pu s'agir d'un dispositif de type machine-to-machine comme par exemple l'ordinateur de bord d'un véhicule, ou encore d'une carte à puce comme par exemple une carte bancaire ou un document d'identité électronique.

Dans l'exemple de la figure 1A, le terminal comprend un notifieur 20 et un émetteur-récepteur E/R ainsi qu'un ensemble électronique EE au sens de l'invention.

Le notifieur 20 est un composant matériel comportant un microprocesseur. Il est capable d'envoyer et de recevoir des notifications par des canaux dédiés préalablement initialisés, soit avec l'émetteur-récepteur E/R, soit avec les différents systèmes d'exploitation afin de les avertir de la réception d'un message.

L'ensemble électronique EE, qui peut constituer un chipset du terminal 1 (ce chipset peut être sur un System On Chip du terminal), comporte le code de deux systèmes d'exploitation, à savoir un système d'exploitation polyvalent 100 et un système d'exploitation de confiance 200, ayant chacun une mémoire propre, respectivement M₁₀₀ et M₂₀₀ ainsi qu'un processeur 300 exécutant le code de ces systèmes d'exploitation.

En particulier, ces deux systèmes d'exploitation sont démarrés de manière conjointe, au démarrage du terminal 1. En effet, de façon connue de l'homme du métier, l'environnement d'exécution sécurisé du système d'exploitation de confiance 200 dispose d'un mécanisme de démarrage sécurisé (« Secure Boot » en anglais) qui consiste à authentifier le système d'exploitation de confiance 200, puis à l'initialiser, c'est-à-dire à le lancer, puis à démarrer le système d'exploitation polyvalent 100.

Plus précisément, le Secure Boot est une chaîne d'étapes amenant au démarrage complet du terminal, chaque étape validant la suivante. Ainsi l'étape i+1 n'est déclenchée que si l'étape i valide la transition.

Toutefois, le fonctionnement actif, par opposition à la veille, de chacun des systèmes d'exploitation est exclusif. C'est-à-dire que lorsqu'un des systèmes d'exploitation est actif, l'autre est en mode inactif.

L'ensemble électronique comporte en outre une mémoire M_{P} partagée entre le système d'exploitation de confiance et le système d'exploitation polyvalent. Cette mémoire permet de stocker un message destiné au système d'exploitation polyvalent 100, préalablement reçu puis aiguillé par le système d'exploitation de confiance 200.

Ainsi, dans ce mode, lorsque l'émetteur-récepteur E/R reçoit un message, il le transmet directement au notifieur 20 qui le mémorise via un canal dédié dans une mémoire de confiance, à savoir dans cet exemple la mémoire propre M₂₀₀ du système d'exploitation de confiance 200.

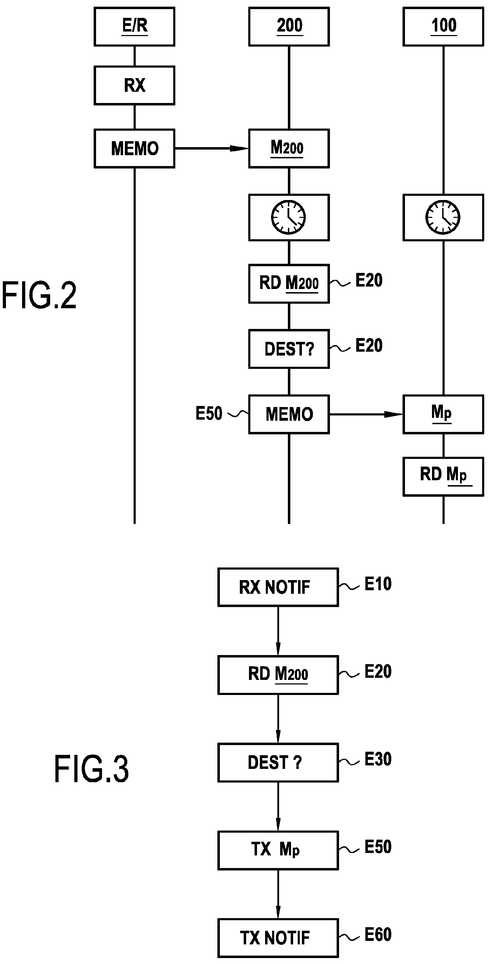

Le système d'exploitation de confiance 200 réalise ensuite l'aiguillage de ce message. La mémoire M₂₀₀ peut d'ailleurs constituer un support pour stocker le programme d'ordinateur comportant les instructions pour la mise en oeuvre des étapes du procédé d'aiguillage tel que décrit ultérieurement en référence aux figures 2 et 3.

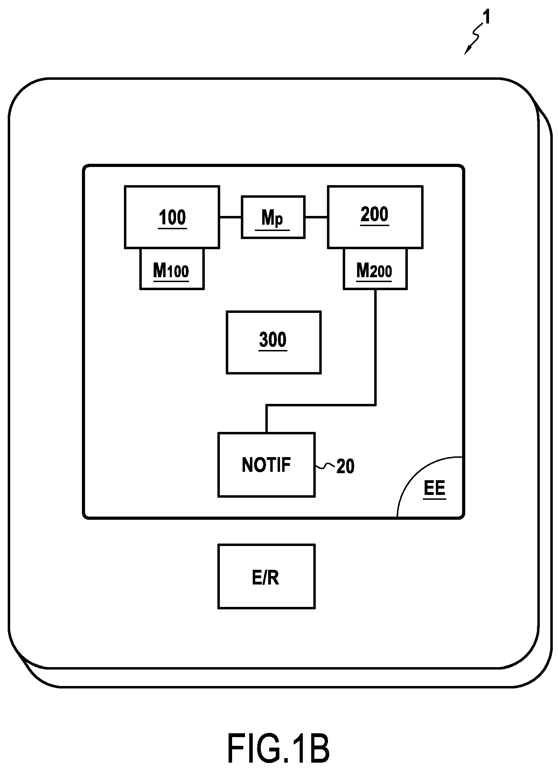

La **figure 1B** représente un terminal 1 conforme à un deuxième mode de réalisation de l'invention. Ce mode diffère de celui de la figure 1A en ceci que l'ensemble électronique EE comprend le notifieur 20.

En variante, l'émetteur-récepteur E/R pourrait également être compris dans l'ensemble électronique EE. Ainsi, le notifieur et l'émetteur récepteur seraient tous deux intégrés à l'ensemble électronique.

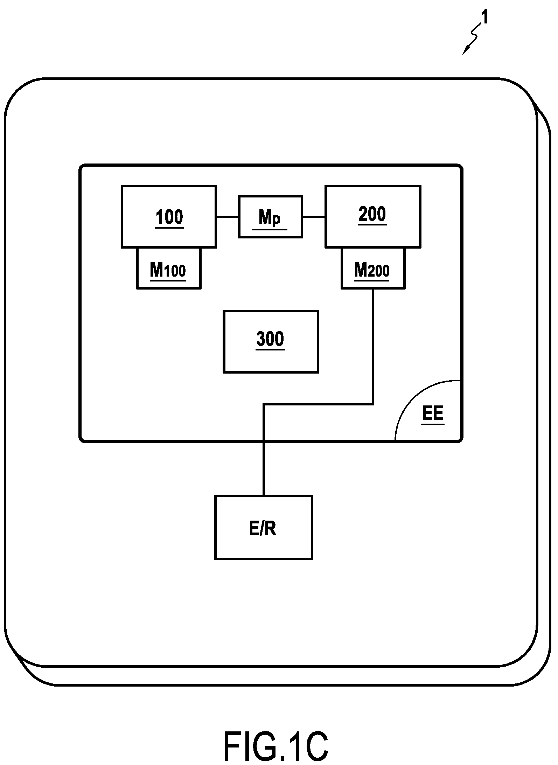

La **figure 1C** représente un terminal 1 conforme à un troisième mode de réalisation de l'invention. Ce mode diffère de celui des figures 1A et 1B en ceci que le terminal ne comporte pas de notifieur.

Dans ce mode, l'émetteur-récepteur E/R mémorise directement le message réceptionné dans une mémoire de confiance, dans cet exemple la mémoire propre M₂₀₀ du système d'exploitation de confiance 200, via un canal dédié.

La **figure 2** représente les principales étapes d'un procédé d'aiguillage selon un premier mode de réalisation de l'invention, pouvant être mis en oeuvre dans un terminal tel que décrit précédemment en référence à la figure 1C.

Dans un premier temps, l'émetteur-récepteur E/R reçoit un message. Il mémorise ce message dans la mémoire M₂₀₀ via un canal dédié, ce canal ayant été préalablement initialisé.

Plus précisément, l'initialisation d'un canal consiste à initialiser un contexte puis à démarrer une session de communication.

Dans ce mode de réalisation, le système d'exploitation de confiance 200 consulte régulièrement la mémoire M₂₀₀ au cours d'une étape E20.

En pratique, le rythme de consultation peut être déterminé soit par une horloge marquant le basculement (en mode actif) du système d'exploitation polyvalent au système d'exploitation de confiance, soit par la réception d'une commande spécifique (« polling » en anglais). Ce dernier cas n'est pas représenté.

En variante la consultation de cette mémoire par le système d'exploitation de confiance 200 peut être provoquée suite à une certaine action de l'utilisateur du terminal ou d'une application du système d'exploitation polyvalent.

Lorsque la mémoire M₂₀₀ contient un message, le système d'exploitation de confiance 200 entreprend d'en déterminer le destinataire effectif au cours d'une étape E30.

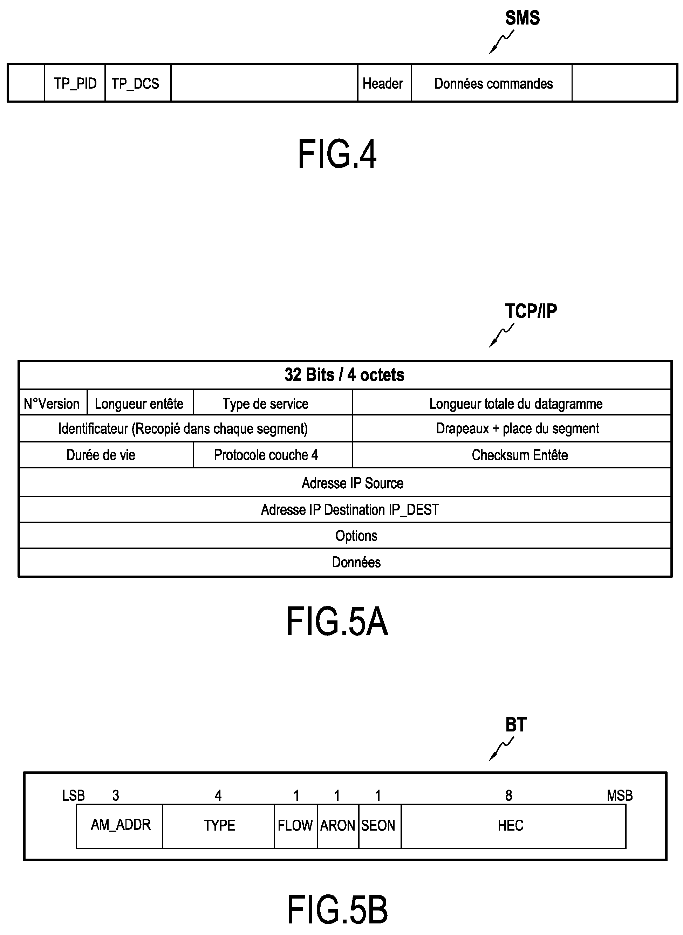

Dans un premier exemple, on suppose que le message est un SMS en mode PDU et comportant un champ TP_DCS, tel que représenté à la **figure 4****.**

La présente invention se propose de modifier la norme GSM 03.40 connue de l'homme du métier et selon laquelle le champ TP_DCS est codé sur 8 bits, afin de rajouter une classe correspondant au système d'exploitation de confiance.

De retour à notre premier exemple, un module de détermination du système d'exploitation de confiance lit ce champ TP_DCS et grâce à la classe contenue dans ce champ, détermine le système d'exploitation visé par ce message.

Dans un deuxième exemple, on suppose que le message est une trame selon le protocole TCP/IP comportant un champ IP_DEST, tel que représenté à la **figure 5A****.**

De façon connue de l'homme du métier, ce champ comporte l'adresse IP de destination du message.

Dans le contexte de l'invention, l'environnement d'exécution du système d'exploitation polyvalent et l'environnement d'exécution du système d'exploitation de confiance comportent chacun des moyens de communication identifiés par leur adresse MAC (« Media Access Control » en anglais).

De retour à notre deuxième exemple, un module de détermination du système d'exploitation de confiance lit ce champ IP_DEST.

Afin d'identifier le système d'exploitation visé, il est nécessaire d'obtenir l'adresse MAC correspondant à l'adresse IP_DEST.

Pour cela, le système d'exploitation de confiance émet une requête de type ARP vers (« Adress Resolution Protocol » en anglais) les moyens de communication de chacun des environnements d'exécution précités.

On précise que de manière connue de l'homme du métier, les moyens de communication ayant l'adresse IP correspondant à l'adresse IP_DEST répondent à la requête ARP en précisant leur adresse MAC.

De cette manière, le système d'exploitation de confiance peut mémoriser les correspondances IP/MAC dans une table d'association mémorisée par exemple dans sa mémoire propre M₂₀₀ ou encore dans la mémoire partagée M_{P}, facilitant ainsi l'aiguillage de messages ultérieurs.

En variante, une table d'association IP/MAC prédéfinie pourrait être mémorisée par exemple dans la mémoire partagée M_{P}, de sorte qu'il n'y aurait plus qu'à y lire l'adresse MAC correspondant à l'adresse IP pour identifier le système d'exploitation visé via les moyens de communication de son environnement d'exécution.

En pratique, une fois l'adresse MAC du système d'exploitation visé obtenue, la trame est ré-empaquetée en une trame Ethernet et transmise aux moyens de communication caractérisés par cette adresse MAC.

De manière générale, le routage mis en oeuvre dans cet exemple est effectué selon la couche 2 du modèle OSI.

Dans une variante possible de ce deuxième exemple, le message est non pas une trame selon le protocole TCP/IP mais une trame Bluetooth BT comportant un champ AM_ADDR, tel que représenté à la **figure 5B****.**

De façon connue de l'homme du métier, ce champ AM_ADDR comporte une adresse locale qui caractérise un noeud du réseau Bluetooth appelé Piconet. Cette adresse réseau locale est associée à une adresse BD_ADDR identifiant chaque terminal à l'initialisation du piconet.

Dans cette variante, le système d'exploitation de confiance cherche à obtenir l'adresse BD_ADDR caractéristique des moyens de communication de l'environnement d'exécution du système d'exploitation visé, de façon similaire à l'obtention de l'adresse MAC dans l'exemple précédent.

Dans un troisième exemple, un module de détermination du système d'exploitation de confiance interprète des commandes contenues dans le message. En pratique, cette interprétation est basée sur une liste de commandes ou de signatures de fonctions, permettant de reconnaître le système d'exploitation visé en fonction de la signature de la commande ou d'une empreinte contenue dans le message.

Contrairement aux deux exemples précédents dans lesquels la détermination du système d'exploitation visé reposait sur l'interprétation de métadonnées (champ destinataire) du message, la détermination repose ici sur l'interprétation des données elles-mêmes (signature, empreinte).

Ainsi, selon par exemple la nature sécurisée ou non de la commande, il est possible d'en déduire que le système d'exploitation de confiance est visé par ce message.

De manière générale, l'invention couvre la détermination du système d'exploitation visé par un message via l'interprétation d'un élément ou « tag » en anglais, situé dans le corps ou l'en-tête de ce message.

L'invention couvre également l'aiguillage des messages du type de ceux reçus par les protocoles de communication utilisés dans la téléphonie mobile ou tout autre protocole de communication sans fil.

Dans la suite de la description de ce mode de réalisation, on considère que le destinataire du message est le système d'exploitation polyvalent 100.

Au cours d'une étape E50, un module du système d'exploitation de confiance 200 mémorise le message dans la mémoire partagée M_{P}, accessible au système d'exploitation polyvalent 100.

En variante, dans le cas où le système d'exploitation de confiance 200 a la possibilité d'accéder à la mémoire propre M₁₀₀ du système d'exploitation polyvalent 100.

Ainsi, le système d'exploitation polyvalent 100 peut ultérieurement consulter cette mémoire afin de disposer de son message.

Cette consultation peut se faire de façon régulière. En pratique, le rythme de consultation peut être déterminé soit par une horloge marquant le basculement (en mode actif) du système d'exploitation de confiance au système d'exploitation polyvalent, soit par la réception d'une commande spécifique (« polling » en anglais). Ce dernier cas n'est pas représenté.

En variante la consultation de cette mémoire par le système d'exploitation polyvalent 100 peut être provoquée suite à une certaine action de l'utilisateur du terminal ou d'une application.

La **figure 3** représente les principales étapes d'un procédé d'aiguillage selon un deuxième mode de réalisation de l'invention, pouvant être mis en oeuvre dans un terminal tel que décrit précédemment en référence à la figure 1A ou bien 1B.

Lorsque l'émetteur-récepteur E/R du terminal 1 reçoit un message, il l'envoie au notifieur 20 qui le mémorise via un canal dédié dans une mémoire de confiance, ici la mémoire propre M₂₀₀ du système d'exploitation de confiance 200.

Ensuite, au cours d'une étape E10, le système d'exploitation de confiance 200 reçoit une notification de réception d'un message, cette notification provenant du notifieur 20.

Au cours d'une étape E20, le système d'exploitation de confiance 200 consulte donc sa mémoire M₂₀₀.

A l'étape E30, le système d'exploitation de confiance 200 détermine le système d'exploitation effectivement visé par le message, comme décrit précédemment en référence à la figure 2.

Si le message lui est dédié, le système d'exploitation de confiance 200 le prend en charge.

Dans cet exemple, on considère le cas contraire, à savoir le cas où le message s'adresse au système d'exploitation polyvalent 100.

Au cours d'une étape E50, le système d'exploitation de confiance 200 le mémorise dans une mémoire partagée M_{P} avec le système d'exploitation polyvalent 100.

Puis le système d'exploitation de confiance 200 envoie (étape E60) une notification au notifieur 20 pour l'informer que le message est destiné au système d'exploitation polyvalent.

Suite à cela, le notifieur peut ainsi informer le système d'exploitation polyvalent de la réception d'un message qui lui est destiné, de sorte qu'à son réveil, le système d'exploitation polyvalent consulte la mémoire partagée MP dans laquelle est stocké le message, ce réveil pouvant s'effectuer régulièrement sur le top d'une horloge ou sur réception d'une commande envoyée par le notifieur.

## Revendications

1. Procédé d'aiguillage d'au moins un message, ce procédé étant mis en oeuvre sous la dépendance d'un système d'exploitation de confiance (200) d'un dispositif électronique (1) comportant un ensemble électronique (EE) sur lequel s'exécutent ledit système d'exploitation de confiance (200) et un système d'exploitation polyvalent (100), ledit procédé étant **caractérisé en ce qu'**il comprend :
une étape de consultation (E20) d'une mémoire de confiance (M₂₀₀) dudit terminal, dite première mémoire ;
lorsque ladite première mémoire (M₂₀₀) comporte un message, une étape de détermination (E30) du système d'exploitation visé par ledit message parmi au moins ledit système d'exploitation polyvalent (100) et ledit système d'exploitation de confiance (200) ;
et lorsque ledit message vise ledit système d'exploitation polyvalent (100), une étape de transfert (E50) dudit message de ladite première mémoire (M₂₀₀) dans une mémoire (M_{P}) accessible audit système d'exploitation polyvalent (100), dite deuxième mémoire.

2. Procédé d'aiguillage selon la revendication 1, **caractérisé en ce que** ladite étape de consultation (E20) est effectuée en réaction à la réception (E10) d'une notification de réception d'un message via un canal dédié entre un notifieur (20) dudit dispositif électronique (1) et ledit système d'exploitation de confiance (200).

3. Procédé d'aiguillage selon l'une quelconque des revendications 1 à 2, **caractérisé en ce qu'**il comporte, lorsque ledit message est destiné audit système d'exploitation polyvalent, une étape d'envoi (E60) d'une notification informant un notifieur (20) dudit dispositif électronique (1) que ledit message est destiné audit système d'exploitation polyvalent (100).

4. Procédé d'aiguillage selon l'une quelconque des revendications 1 à 3, **caractérisé en ce que** ledit message comprend une trame (SMS ; TCP/IP ; BT) et **en ce que** ladite étape de détermination comprend une étape de lecture d'un champ destinataire (TP_DCS ; IP_DEST ; AM_ADDR) de ladite trame ou dudit message pour identifier ledit système d'exploitation visé.

5. Procédé d'aiguillage selon la revendication 4, **caractérisé en ce que** ladite étape de détermination comprend en outre une étape d'obtention de l'adresse (MAC ; BD_ADDR) de moyens de communication de l'environnement d'exécution dudit système d'exploitation visé, à partir d'une adresse de destination comprise dans ledit champ destinataire (IP_DEST ; AM_ADDR) de ladite trame (TCP/IP ; BT) ou dudit message, ladite adresse de destination étant lue lors de ladite étape de lecture.

6. Procédé d'aiguillage selon la revendication 5, **caractérisé en ce que** ladite étape d'obtention se fait par lecture de l'adresse desdits moyens de communication dans une table d'association mémorisée dans une mémoire (M_{P}) accessible audit système d'exploitation de confiance (200).

7. Procédé d'aiguillage selon l'une quelconque des revendications 1 à 3, **caractérisé en ce que** ladite étape de détermination (E30) comprend une étape d'interprétation d'une commande contenue dans ledit message.

8. Programme d'ordinateur comportant des instructions pour l'exécution du procédé selon l'une quelconque des revendications 1 à 7 lorsque ledit programme est exécuté par un processeur.

9. Programme d'ordinateur selon la revendication 8, **caractérisé en ce qu'**il constitue ledit système d'exploitation de confiance.

10. Programme d'ordinateur selon la revendication 8, **caractérisé en ce qu'**il constitue une extension dudit système d'exploitation de confiance.

11. Support d'enregistrement (M₂₀₀) lisible par un ordinateur sur lequel est enregistré un programme d'ordinateur comprenant des instructions pour l'exécution du procédé selon l'une quelconque des revendications 1 à 7.

12. Ensemble électronique (EE) pour dispositif électronique (1), ledit ensemble électronique (EE) comprenant un système d'exploitation de confiance (200) et un système d'exploitation polyvalent (100) s'exécutant sur ledit ensemble électronique (EE) étant **caractérisé en ce que** ledit ensemble électronique (EE) comprend :
un module de consultation d'une mémoire de confiance (M₂₀₀) dudit dispositif électronique, dite première mémoire et susceptible de contenir au moins un message ; et
un module de détermination du système d'exploitation visé par ledit message,
un module de transfert dudit message de ladite première mémoire (M₂₀₀) dans une mémoire (M_{P}) accessible audit système d'exploitation polyvalent (100), dite deuxième mémoire, lorsque ledit message vise ledit système d'exploitation polyvalent ;
ces trois modules étant exécutés sous la dépendance dudit système d'exploitation de confiance.

13. Terminal (1) **caractérisé en ce qu'**il comprend un ensemble électronique (EE) selon la revendication 12.

14. Terminal (1) selon la revendication 13, comportant un notifieur (20) et un émetteur-récepteur (E/R), **caractérisé en ce qu'**il comporte un canal de communication dédié entre ledit notifieur (20) et ledit émetteur-récepteur (E/R), par lequel ledit émetteur-récepteur (E/R) envoie ledit message audit notifieur afin que le notifieur le mémorise dans ladite première mémoire (M₂₀₀).

15. Terminal (1) selon la revendication 14, **caractérisé en ce que** ledit ensemble électronique (EE) comprend ledit notifieur (20).

16. Terminal (1) selon la revendication 14, **caractérisé en ce que** ledit ensemble électronique (EE) est un chipset dudit terminal (1).

17. Terminal (1) selon l'une quelconque des revendications 13 à 16, **caractérisé en ce qu'**il est un terminal de téléphonie mobile.

## Patentansprüche

1. Verfahren zur Leitweglenkung von mindestens einer Nachricht, wobei dieses Verfahren in Abhängigkeit von einem vertrauenswürdigen Betriebssystem (200) einer elektronischen Vorrichtung (1) umgesetzt wird, die eine elektronische Baugruppe (EE) aufweist, auf der das vertrauenswürdige Betriebssystem (200) und ein vielseitiges Betriebssystem (100) laufen, wobei das Verfahren **dadurch gekennzeichnet ist, dass** es umfasst:
einen Schritt des Konsultierens (E20) eines vertrauenswürdigen Speichers (M₂₀₀) des Endgeräts, des sogenannten ersten Speichers,
wenn der erste Speicher (M₂₀₀) eine Nachricht aufweist, einen Schritt des Bestimmens (E30) des Betriebssystems, das von der Nachricht betroffen ist, unter mindestens dem vielseitigen Betriebssystem (100) und dem vertrauenswürdigen Betriebssystem (200),
und wenn die Nachricht das vielseitige Betriebssystem (100) betrifft, einen Schritt des Übertragens (E50) der Nachricht von dem ersten Speicher (M₂₀₀) in einen Speicher (M_{P}), der für das vielseitige Betriebssystem (100) zugänglich ist, den sogenannten zweiten Speicher.

2. Verfahren zur Leitweglenkung nach Anspruch 1, **dadurch gekennzeichnet, dass** der Schritt des Konsultierens (E20) als Reaktion auf das Empfangen (E10) einer Empfangsbestätigung einer Nachricht über einen dedizierten Kanal zwischen einem Notifizierer (20) der elektronischen Vorrichtung (1) und dem vertrauenswürdigen Betriebssystem (200) durchgeführt wird.

3. Verfahren zur Leitweglenkung nach einem der Ansprüche 1 bis 2, **dadurch gekennzeichnet, dass** es, wenn die Nachricht für das vielseitige Betriebssystem bestimmt ist, einen Schritt des Sendens (E60) einer Benachrichtigung, die einen Notifizierer (20) der elektronischen Vorrichtung (1) informiert, dass die Nachricht für das vielseitige Betriebssystem (100) bestimmt ist.

4. Verfahren zur Leitweglenkung nach einem der Ansprüche 1 bis 3, **dadurch gekennzeichnet, dass** die Nachricht einen Rahmen (SMS; TCP/IP; BT) aufweist, und dass der Schritt des Bestimmens einen Schritt des Lesens eines Empfängerfelds (TP_DCS; IP_DEST; AM_ADDR) des Rahmens oder der Nachricht aufweist, um das betreffende Betriebssystem zu identifizieren.

5. Verfahren zur Leitweglenkung nach Anspruch 4, **dadurch gekennzeichnet, dass** der Schritt des Bestimmens ferner einen Schritt des Erhaltens der Adresse (MAC; BD_ADDR) von Kommunikationsmitteln der Ausführungsumgebung des betreffenden Betriebssystems ausgehend von einer Zieladresse, die in dem Empfängerfeld (IP_DEST; AM_ADDR) des Rahmens (TCP/IP; BT) oder der Nachricht enthalten ist, aufweist, wobei die Zieladresse während des Schrittes des Lesens gelesen wird.

6. Verfahren zur Leitweglenkung nach Anspruch 5, **dadurch gekennzeichnet, dass** der Schritt des Erhaltens durch Lesen der Adresse von Kommunikationsmitteln in einer Zuordnungstabelle, die in einem Speicher (M_{P}) gespeichert wird, der für das vertrauenswürdige Betriebssystem (200) zugänglich ist, durchgeführt wird.

7. Verfahren zur Leitweglenkung nach einem der Ansprüche 1 bis 3, **dadurch gekennzeichnet, dass** der Schritt des Bestimmens (E30) einen Schritt des Interpretierens eines Befehls, der in der Nachricht enthalten ist, aufweist.

8. Computerprogramm, das Anweisungen für die Ausführung des Verfahrens nach einem der Ansprüche 1 bis 7 aufweist, wenn das Programm durch einen Prozessor ausgeführt wird.

9. Computerprogramm nach Anspruch 8, **dadurch gekennzeichnet, dass** es das vertrauenswürdige Betriebssystem bildet.

10. Computerprogramm nach Anspruch 8, **dadurch gekennzeichnet, dass** es eine Erweiterung des vertrauenswürdigen Betriebssystems bildet.

11. Computerlesbares Aufzeichnungsmedium (M₂₀₀), auf dem ein Computerprogramm aufgezeichnet ist, das Anweisungen für die Ausführung des Verfahrens nach einem der Ansprüche 1 bis 7 aufweist.

12. Elektronische Baugruppe (EE) für die elektronische Vorrichtung (1), wobei die elektronische Baugruppe (EE) ein vertrauenswürdiges Betriebssystem (200) und ein vielseitiges Betriebssystem (100) aufweist, die auf der elektronischen Baugruppe (EE) laufen, **dadurch gekennzeichnet, dass** die elektronische Baugruppe (EE) umfasst:
ein Modul zum Konsultieren eines vertrauenswürdigen Speichers (M₂₀₀) der elektronischen Vorrichtung, dem sogenannten ersten Speicher, und das geeignet ist, mindestens eine Nachricht zu enthalten, und
ein Modul zum Bestimmen des Betriebssystems, das von der Nachricht betroffen ist,
ein Modul zum Übertragen der Nachricht von dem ersten Speicher (M₂₀₀) in einen Speicher (Mp), der für das vielseitige Betriebssystem (100) zugänglich ist, dem sogenannten zweiten Speicher, wenn die Nachricht das vielseitige Betriebssystem betrifft,
wobei die drei Module in Abhängigkeit von dem vertrauenswürdigen Betriebssystem ausgeführt werden.

13. Endgerät (1), **dadurch gekennzeichnet, dass** es eine elektronische Baugruppe (EE) nach Anspruch 12 aufweist.

14. Endgerät (1) nach Anspruch 13, umfassend einen Notifizierer (20) und einen Sender-Empfänger (E/R), **dadurch gekennzeichnet, dass** es einen dedizierten Kommunikationskanal zwischen dem Notifizierer (20) und dem Sender-Empfänger (E/R) aufweist, durch den der Sender-Empfänger (E/R) die Nachricht an den Notifizierer sendet, damit der Notifizierer sie im ersten Speicher (M₂₀₀) speichert.

15. Endgerät (1) nach Anspruch 14, **dadurch gekennzeichnet, dass** die elektronische Baugruppe (EE) den Notifizierer (20) aufweist.

16. Endgerät (1) nach Anspruch 14, **dadurch gekennzeichnet, dass** die elektronische Baugruppe (EE) ein Chipsatz des Endgeräts (1) ist.

17. Endgerät (1) nach einem der Ansprüche 13 bis 16, **dadurch gekennzeichnet, dass** es ein Mobilfunkendgerät ist.

## Claims

1. A method for routing at least one message, this method being implementation-dependent on a trusted operating system (200) of an electronic device (1) comprising an electronic assembly (EE) on which said trusted operating system (200) and a Rich-OS system (100) are executed, said method being **characterized in that** it comprises:
a step (E20) of consulting a trusted memory (M₂₀₀) of said terminal, called first memory;
when said first memory (M₂₀₀) comprises a message, a step (E30) of determining the operating system targeted by said message from among at least said Rich-OS operating system (100) and said trusted operating system (200);
and when said message targets the Rich-OS system (100), a step (E50) of transferring said message from said first memory (M₂₀₀) to a memory (M_{P}) accessible to said Rich-OS system (100), called second memory.

2. Routing method according to claim 1, **characterized in that** said consultation step (E20) is performed in response to the receipt (E10) of notification of receipt of a message via a dedicated channel between a notifier (20) of said electronic device (1) and said trusted operating system (200).

3. Routing method according to any one of claims 1 to 2, **characterized in that**, when said message is intended for said Rich-OS operating system, it comprises a step (E60) of sending a notification informing a notifier (20) of said electronic device (1) that said message is intended for said Rich-OS operating system (100).

4. Routing method according to any one of claims 1 to 3, **characterized in that** said message comprises a frame (SMS; TCP/IP; BT) and **in that** said determination step comprises a step of reading a recipient field (TP_DCS; IP_DEST; AM_ADDR) of said frame or of said message to identify said targeted operating system.

5. Routing method according to claim 4, **characterized in that** said determination step further comprises a step of obtaining the address (MAC; BD_ADDR) of communication means of the execution environment of said targeted operating system, from a destination address included in said recipient field (IP_DEST; AM_ADDR) of said frame (TCP/IP; BT) or of said message, said destination address being read during said reading step.

6. Routing method according to claim 5, **characterized in that** said obtaining step is performed by reading the address of said communication means in a look-up table memorised in a memory (M_{P}) accessible to said trusted operating system (200).

7. Routing method according to any one of claims 1 to 3, **characterized in that** said determination step (E30) comprises a step of interpreting a command comprised in said message.

8. A computer program comprising instructions for the implementation of the method according to any one of claims 1 to 7 when said program is executed by a processor.

9. Computer program according to claim 8, **characterized in that** it forms said trusted operating system.

10. Computer program according to claim 8, **characterized in that** it forms a patch on said trusted operating system.

11. A recording medium (M₂₀₀) readable by a computer on which a computer program is recorded comprising instructions for the implementation of the method according to any one of claims 1 to 7.

12. An electronic assembly (EE) for electronic device (1), said electronic assembly (EE) comprising a trusted operating system (200) and a Rich-OS operating system (100) executed on said electronic assembly (EE) being **characterized in that** said electronic assembly (EE) comprises:
a consultation module to consult a trusted memory (M₂₀₀) of said electronic device, called first memory and able to comprise at least one message; and
a determination module to determine the operating system targeted by said message;
a transfer module to transfer said message from said first memory (M₂₀₀) to a memory (M_{P}) accessible to said Rich-OS operating system (100), called second memory, when said message targets said Rich-OS operating system;
these three modules being execution-dependent on said trusted operating system.

13. A terminal (1) **characterized in that** it comprises an electronic assembly (EE) according to claim 12.

14. Terminal (1) according to claim 13, comprising a notifier (20) and a transmitter-receiver (E/R), **characterized in that** it comprises a dedicated communication channel between said notifier (20) and said transmitter-receiver (E/R), via which said transmitter-receiver (E/R) sends said message to said notifier so that it is memorised by the notifier in said first memory (M₂₀₀).

15. Terminal (1) according to claim 14, **characterized in that** said electronic assembly (EE) comprises said notifier (20).

16. Terminal (1) according to claim 14, **characterized in that** said electronic assembly (EE) is a chipset of said terminal (1).

17. Terminal (1) according to any one of claims 13 to 16, **characterized in that** it is a mobile telephony terminal.
